# EUROPÄISCHE PATENTSCHRIFT

(11) **EP 1 745 230 B1**
(45) Veröffentlichungstag und Bekanntmachung des Hinweises auf die Patenterteilung: **09.04.2008**
(21) Anmeldenummer: 05747610.3
(22) Anmeldetag: 06.05.2005
(51) Int. Cl.: F16H 61/44, F16H 61/42, F16H 59/40, F16H 47/02

(54) **ANTRIEB FÜR EIN MOBILFAHRZEUG**
DRIVE UNIT FOR A MOBILE VEHICLE
MECANISME D'ENTRAINEMENT POUR VEHICULE MOBILE

(30) Priorität: 10.05.2004 DE 102004023630
(43) Veröffentlichungstag der Anmeldung: 24.01.2007
(73) Patentinhaber: ZF FRIEDRICHSHAFEN AG, 88038 Friedrichshafen (DE)
(72) Erfinder: LEGNER, Jürgen, 88048 Friedrichshafen (DE)
(86) Internationale Anmeldenummer: PCT/EP2005/004935
(87) Internationale Veröffentlichungsnummer: WO 2005/111475

(56) Entgegenhaltungen:
- EP-A- 0 483 543
- FR-A- 1 321 351
- US-A- 3 213 712
- US-A- 6 044 728

## Beschreibung

Die Erfindung bezieht sich auf einen Antrieb für ein Mobilfahrzeug nach der im Oberbegriff von Anspruch 1 näher definierten Art.

Gattungsgemäße Antriebe werden insbesondere für Arbeitsmaschinen, wie beispielsweise Radlader, Grader oder Bagger, verwendet. Bei Radladern, insbesondere Radlader > 12 t, wird der gesamte Fahrbereich in zwei Fahrbereiche geteilt, einen Arbeitsbereich, vorzugsweise bis zu einer Geschwindigkeit von ca. 20 km/h, und einen Transportbereich, welcher sich bis zu einer Geschwindigkeit von ca. 40 km/h erstrecken kann. Während des Arbeitsbereichs ist es vorteilhaft, wenn dieser gesamte Geschwindigkeitsbereich ohne mechanische Schaltungen ausgeführt werden kann, da durch jede mechanische Schaltung durch den Wechsel der Übersetzung Zeit benötigt wird, welche die Arbeitszeit des Radladers verlängert.

Die EP 0 483 543 B1 offenbart einen hydrostatischen Antrieb, vorzugsweise für ein Erdbewegungsfahrzeug, beispielsweise einen Radlader, bei welchem ein erster Axialkolben-Hydromotor und ein zweiter Axialkolben-Hydromotor in einem Summierungsgetriebe so zusammengeschaltet sind, dass in einem Anfahrgang die Drehmomente beider Hydromotore die Abtriebswelle antreiben und bei einer Endgeschwindigkeit ein Hydromotor sich im Leerlauf befindet und der andere Hydromotor allein die Antriebswelle antreibt. Zwischen dem Anfahren und der Endgeschwindigkeit werden vorzugsweise über Synchronisierungen mehrere Untersetzungsstufen geschaltet. Der bei Endgeschwindigkeit abgeschaltete Motor befindet sich auf Schluckvolumen Null und im Leerlauf, da dieser Motor sonst überdreht werden würde. Die Synchronisierungen müssen sowohl das Massenträgheitsmoment der Zahnräder als auch das Massenträgheitsmoment des gesamten Axialkolbenmotors mit seinen Kolben und Zylindern synchronisieren. Weil der Motor auch bei Schluckvolumen Null mit Druck beaufschlagt ist, erfahren die Lager der Abtriebswelle des Hydromotors erhebliche Axialkräfte, die das Synchronisiermoment erhöhen. Um eine Endgeschwindigkeit von nahezu 40 km/h zu erreichen, benötigt dieser Antrieb zwei Hydromotore und mindestens zwei Schalteinrichtungen, wodurch eine Schaltung im Arbeitsbereich nicht vermieden werden kann.

Der vorliegenden Erfindung liegt die Aufgabe zugrunde, einen Antrieb für ein Mobilfahrzeug, insbesondere einer Arbeitsmaschine, wie einem Radlader, zu schaffen, welcher sich durch einen einfachen Aufbau des Untersetzungsgetriebes sowie möglichst wenig Schaltungen im Arbeitsbereich auszeichnet.

Die Aufgabe wird mit einem, auch die kennzeichnenden Merkmale des Hauptanspruchs aufweisenden, gattungsgemäßen Antrieb für ein Mobilfahrzeug gelöst.

Erfindungsgemäß treibt ein erster, in seinem Hubvolumen verstellbarer Hydromotor ein erstes Untersetzungsgetriebeteil und ein zweiter, in seinem Hubvolumen verstellbarer Hydromotor ein zweites Untersetzungsgetriebeteil an, wobei die Drehmomente der beiden Untersetzungsgetriebeteile in einem Summierungsgetriebe zusammengeführt werden, welches die Abtriebswelle des Getriebes antreibt. Vorzugsweise ist ein Untersetzungsgetriebeteil schaltbar ausgeführt, so dass ein Hydromotor über eine erste Untersetzung mit dem Summierungsgetriebe verbunden ist und auch auf eine zweite Untersetzung geschaltet werden kann. Die Schalteinrichtung, welche zwischen den beiden Übersetzungen schaltet, ist vorzugsweise als mechanische Synchronisierung ausgeführt, welche vorzugsweise nur zwei Schaltstellungen aufweist. In einer ersten Schaltstellung ist der Hydromotor über die erste Übersetzung mit der Abtriebswelle verbunden und in der zweiten Schaltstellung ist der erste Hydromotor über die zweite Übersetzung mit der Abtriebswelle verbunden. Es besteht auch die Möglichkeit, die Schalteinrichtung als Lamellenkupplung auszuführen. Eine Mittelstellung der Schalteinrichtung, in welcher der Hydromotor vollständig abgekoppelt ist, ist nicht notwendig, da der Hydromotor in jedem Fahrzustand mit der Abtriebswelle in Verbindung stehen kann. Dies schließt eine Schalteinrichtung, welche eine Mittelstellung aufweist, jedoch nicht aus. Vorzugsweise ist der mit der Schalteinrichtung verbundene Hydromotor als Radialkolben-Hydromotor, wie beispielsweise in der WO 99/17021, ausgeführt, welche hiermit vollständig mitumfaßt sein soll. Die Hubvolumen-Verstelleinrichtung dieses Motors ist vorzugsweise hydraulisch ausgeführt, wodurch in der Kurbelwelle Kolben angeordnet sind, welche den Exzenter der Kurbelwelle verstellen, so dass dieser von einer koaxialen Welle bis zu einem definierten Exzenter verstellt werden kann. Vorzugsweise sind diese Kolben mit dem Hochdruck verbunden. Durch die Verwendung eines solchen Radialkolben-Hydromotors, welcher bei seinem Schluckvolumen Null eine koaxiale Welle als Kurbelwelle aufweist, hat die Synchronisiereinrichtung ausschließlich das Massenträgheitsmoment der Zahnräder des Untersetzungsgetriebeteils und der Welle des Radialkolben-Hydromotors zu synchronisieren. Die Kolben in den Zylindern führen nahezu keine Hubbewegung aus und müssen von der Synchronisiereinrichtung nicht beschleunigt werden, da sie ortsfest im Gehäuse gelagert sind. Vorzugsweise ist in dem Zeitpunkt, in welchem die Synchronisiereinrichtung schaltet, der Radialkolbenmotor vom Hochdruck getrennt, wodurch die Lagerkräfte, resultierend aus der Druckbelastung der Kolben, deutlich verringert werden, wodurch die Drehmomentbelastung der Synchronisierung zusätzlich reduziert wird. Um das maximale Antriebsmoment zu erreichen, werden beide Hydromotore auf maximales Hubvolumen verstellt und die Schalteinrichtung so angesteuert, dass der mechanisch schaltbare Hydromotor mit der großen Übersetzung mit der Abtriebswelle verbunden ist. Bei der maximalen Endgeschwindigkeit, d. h. der maximalen Abtriebsdrehzahl der Abtriebswelle des Getriebes, befindet sich ein Hydromotor auf seinem Hubvolumen Null und ist vom Hochdruck getrennt, und der andere Hydromotor ist über eine kleinstmögliche Übersetzung ebenfalls mit der Abtriebswelle verbunden und auf einem minimalen Hubvolumen. In diesem Fahrzustand befindet sich der auf Hubvolumen Null verschwenkte Hydromotor oberhalb seiner maximal zulässigen Drehzahl bei Hochdruckbeaufschlagung, was jedoch möglich ist, da dieser Hydromotor vom Hochdruck getrennt und sein Hubvolumen auf Null verstellt ist. Indem auf diesen Hydromotor keine Hochdruckkräfte wirken und der Hydromotor auf Hubvolumen Null verschwenkt ist und somit die Kolben nahezu keinen Hub in den Zylindern ausführen, besteht die Möglichkeit, diesen Hydromotor oberhalb seiner maximal zulässigen Drehzahl zu betreiben. Somit ist es möglich, mit nur einer Schalteinrichtung und zwei in ihrem Hubvolumen verstellbaren Hydromotoren eine Arbeitsmaschine > 12 t anzutreiben, bei welcher eine Endgeschwindigkeit von nahezu 40 km/h erreicht werden kann. Dabei sind die Übersetzungen und die Hydromotore so zu wählen, dass erst bei einer Fahrgeschwindigkeit von nahezu 20 km/h der Wechsel der Übersetzung über die Schalteinrichtung notwendig wird, wodurch das Fahrzeug in seinem gesamten Arbeitsbereich ohne mechanische Schaltung betrieben werden kann.

In einer weiteren Ausgestaltungsform der Erfindung sind die Untersetzungsgetriebeteile, das Summierungsgetriebe und die Hydromotore in einem gemeinsamen Getriebegehäuse angeordnet, welches gleichzeitig das Druckmittelreservoir für die Hydraulikeinheiten bildet. Dadurch ist es nicht mehr notwendig, die Hydromotore mit einem druckmitteldichten Gehäuse zu umgeben, da die Leckage der Hydromotore direkt in das Druckmittelreservoir abfließen kann.

Indem die Motore nicht auf der Abtriebswelle angeordnet sind, ist es möglich, die Druckmittelzuführung zur Verstellung des Hubvolumens auf einer Seite der Kurbelwelle in der Kurbelwelle anzuordnen und mit dem Hochdruck zu verbinden. Die Abdichtung kann somit auf einem geringen Durchmesser angeordnet sein, wodurch auch bei höheren Drücken höhere Drehzahlen möglich sind.

Weitere Merkmale sind der Figuren-Beschreibung zu entnehmen.
Es zeigen:

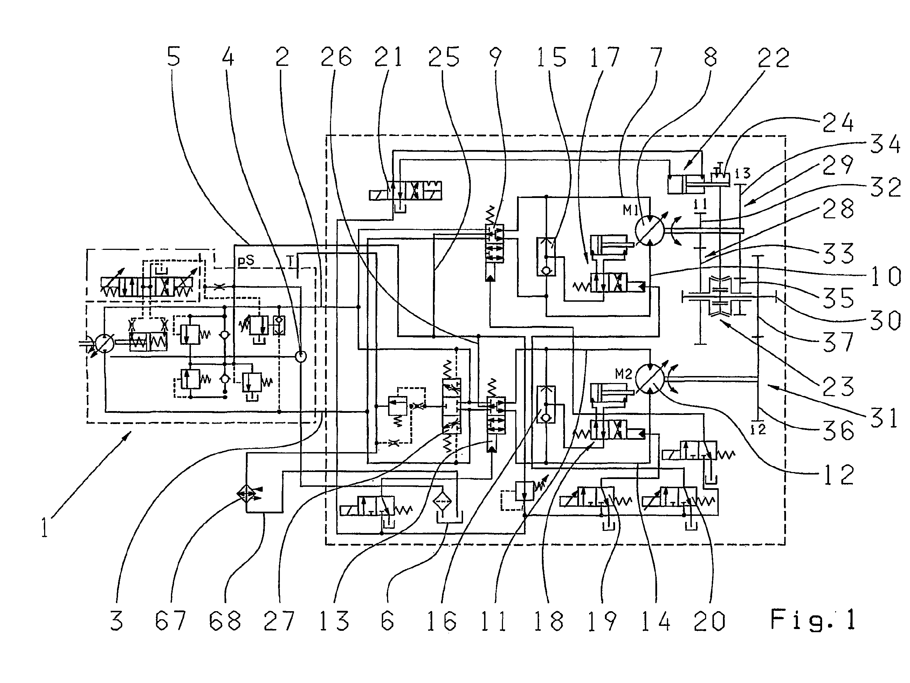

- Fig. 1: ein Getriebe- und Hydraulikschema der erfindungsgemäßen Ausführung;
- Fig. 2: ein Diagramm, bei welchem die Fahrgeschwindigkeit über dem Hubvolumen dargestellt ist und
- Fig. 3: ein Diagramm, bei welchem die Fahrgeschwindigkeit über den Drehzahlen der Motore dargestellt ist.

### Fig. 1:

Ein nicht gezeigter Antriebsmotor treibt eine Pumpe 1 an, welche Druckmittel in eine gemeinsame Hochdruckleitung 2 fördert und aus einer gemeinsamen Niederdruckleitung 3 saugt. Die Pumpe ist vorzugsweise als elektronisch-drehzahlabhängige Verstellpumpe ausgeführt und steht mit einer elektronischen Steuereinheit in Verbindung. Eine Speisepumpe 4, welche ebenfalls von der Antriebsmaschine angetrieben ist, fördert Druckmittel in eine Speisedruckleitung 5 und saugt aus einem Reservoir 6, welches beispielsweise das Getriebegehäuse sein kann. Die Druckmittelzuführung 7 des ersten Motors 8 ist in einer ersten Schaltstellung des Ventils 9 mit der gemeinsamen Hochdruckleitung 2 verbunden. Die Druckmittelrückführung 10 ist in einer ersten Schaltstellung des Ventils 9 mit der gemeinsamen Niederdruckleitung 3 verbunden. Je nach Förderrichtung der Pumpe 1 wechselt die gemeinsame Hochdruckleitung 2 mit der gemeinsamen Niederdruckleitung 3 und die Druckmittelzuführung 7 mit der Druckmittelrückführung 10. Die Druckmittelzuführung 11 des zweiten Motors 12 ist ebenfalls in einer ersten Schaltstellung des Ventils 13 mit der gemeinsamen Hochdruckleitung und die Druckmittelrückführung 14 ist in einer ersten Schaltstellung des Ventils 13 mit der gemeinsamen Niederdruckleitung 3 verbunden. Die Ventile 15 und 16 verbinden die Hubvolumen-Verstelleinrichtung 17 und die Hubvolumen-Verstelleinrichtung 18 mit dem Hochdruck. Die Proportionalventile 19 und 20 sind einerseits mit einer elektronischen Steuereinheit und andererseits mit den Hubvolumen-Verstelleinrichtungen 17 und 18 verbunden, wodurch das Hubvolumen des ersten Motors 8 und des zweiten Motors 12 eingeregelt werden kann. Über das Ventil 21, welches ebenfalls mit der elektronischen Steuereinrichtung verbunden ist, wird die Betätigungsvorrichtung 22 der Schalteinrichtung 23 angesteuert. Vorzugsweise ist die Betätigungseinrichtung 22 über eine Rastierung 24 rastierbar, wodurch die Schalteinrichtung 23 in ihrer Position verbleibt. Wird das Ventil 9 bzw. das Ventil 13 in seine zweite Schaltstellung verschoben, so werden die Druckmittelzuführung 7 bzw. 11 von der gemeinsamen Hochdruckleitung 2 und die Druckmittelrückführung 10 bzw. 14 von der gemeinsamen Niederdruckleitung 3 getrennt und mit der Leitung 25 bzw. 26 verbunden, welche mit der Speisedruckleitung 5 verbunden ist. Es besteht auch die Möglichkeit, die Leitung 25 und die Leitung 26 mit dem Ausgang des Spülventils 27 zu verbinden, was jedoch den Nachteil hat, dass heißes Öl zu den Ventilen 9 gelangt. Somit sind in der zweiten Schaltstellung des Ventils 9 der erste Motor 8 ausschließlich mit dem Speisedruck der Speisepumpe 4 und in der zweiten Schaltstellung des Ventils 13 der zweite Motor 12 ausschließlich mit dem Speisedruck der Speisepumpe 4 beaufschlagt. Außerdem ist es möglich, die Leitung 25 und die Leitung 26 mit der Leitung 68 (Schmierdruck) zu verbinden. Indem das Ventil 15 zwischen dem ersten Motor 8 und dem Ventil 9 angeordnet ist, ist in der zweiten Schaltstellung des Ventils 9 auch die Verstelleinrichtung 17 ausschließlich mit dem Speisedruck der Speisepumpe 4 bzw. dem Schmierdruck beaufschlagt. Das Ventil 16 ist ebenfalls zwischen dem Ventil 13 und dem zweiten Hydromotor 12 angeordnet und ist somit in der zweiten Schaltstellung des Ventils 13 ebenfalls nur mit dem Speisedruck der Speisepumpe 4 bzw. dem Schmierdruck beaufschlagt. Somit sind die Hubvolumen-Verstelleinrichtung 17 und die Hubvolumen-Verstelleinrichtung 18 in der zweiten Schaltstellung der Ventile 9 und 13 nur mit dem Druck beaufschlagt, welcher es nicht ermöglicht, das Hubvolumen zu vergrößern. Indem der erste Motor 8 und die Hubvolumen-Verstelleinrichtung 17 ausschließlich mit dem Druck der Speisepumpe 4 beaufschlagt sind, ist es möglich, diesen Motor über seine maximal zulässige Drehzahl bei Hochdruckbeaufschlagung zu betreiben. Indem der zweite Motor 12 und die Hubvolumen-Verstelleinrichtung 18 nur mit dem Druck der Speisepumpe 4 beaufschlagt sind, ist es möglich, den zweiten Motor 12 über seine maximal zulässige Drehzahl bei Hochdruckbeaufschlagung zu betreiben. Indem der erste Motor 8 und der zweite Motor 12 immer entweder mit dem Hochdruck oder mit dem Druck der Speisepumpe bzw. mit dem Schmierdruck beaufschlagt sind, sind die Kolben permanent mit Druckmittel gefüllt, wodurch bei einer Zuschaltung des Motors dieser nicht erst mit Druckmittel gefüllt werden muß, was zu einem Schaltruck führen könnte. Der erste Motor 8 ist mit einem ersten Untersetzungsgetriebeteil 28 und einem zweiten Untersetzungsgetriebeteil 29 verbunden. Das erste und das zweite Untersetzungsgetriebeteil sind mit der Schalteinrichtung 23 verbunden, welche mit der Abtriebswelle 30 verbunden ist, die das Summierungsgetriebe bildet. Der zweite Motor 12 treibt ein drittes Untersetzungsgetriebeteil 31 an, welches ebenfalls mit der Abtriebswelle 30, die das Summierungsgetriebe bildet, verbunden ist. Das erste Untersetzungsgetriebeteil 28 besteht vorzugsweise aus einem Stirnradgetriebe mit einem ersten Stirnrad 32 und einem zweiten Stirnrad 33, welches mit der Schalteinrichtung 23 verbunden ist, und das zweite Untersetzungsgetriebeteil 29 besteht aus einem ersten Stirnrad 34, welches mit dem Hydromotor verbunden ist, und einem zweiten Stirnrad 35, welches mit der Schalteinrichtung 23 verbunden ist. Das dritte Untersetzungsgetriebeteil 31 besteht aus einem ersten Stirnrad 36 und einem zweiten Stirnrad 37, wobei das erste Stirnrad 36 mit dem zweiten Motor 12 und das zweite Stirnrad 37 mit der Abtriebswelle 30 verbunden sind. Die Abtriebswelle 30 ist vorzugsweise über ein Differentialgetriebe mit den Antriebsachsen und Antriebsrädern verbunden. Um das maximale Drehmoment im Anfahrvorgang zu erreichen, werden die Hubvolumen-Verstelleinrichtung 17 und die Hubvolulmen-Verstelleinrichtung 18 so verstellt, dass der erste Motor 8 und der zweite Motor 12 auf ihrem maximalen Hubvolumen sind. Die Betätigungsvorrichtung 22 wird so geschaltet, dass die Schalteinrichtung 23 den Hydromotor 8 mit dem ersten Stirnrad 32, dem zweiten Stirnrad 33 und der Abtriebswelle 30 verbindet. Wird nun die Pumpe 1 ausgeschwenkt, wird das Drehmoment des ersten Motors 8 und des zweiten Motors 12 von der Abtriebswelle 30 aufsummiert und das Fahrzeug angetrieben. Durch weiteres Ausschwenken der Pumpe 1 erhöht sich die Abtriebsdrehzahl der Abtriebswelle 30 und somit die Fahrgeschwindigkeit des Fahrzeugs. Durch weitere Reduzierung der Hubvolumen des ersten Motors 8 und des zweiten Motors 12 wird die Drehzahl der Abtriebswelle 30 und somit die Abtriebsgeschwindigkeit weiter erhöht. Vorzugsweise ist am Ende des Fahrbereichs, bei nahezu 20 km/h, der zweite Motor 12 auf seinem Schluckvolumen Null und bei seiner maximal zulässigen Abtriebsdrehzahl. In diesem Zustand wird das Ventil 13 in seine zweite Schaltstellung geschaltet, so dass der zweite Hydromotor 12 in seiner Drehzahl weiter erhöht werden kann. Zusätzlich wird über die Betätigungsvorrichtung 22 die Schalteinrichtung 23 umgeschaltet, so dass nun der erste Motor 8 über das zweite Untersetzungsgetriebeteil 29 mit der Abtriebswelle 30 verbunden ist. Durch weiteres Reduzieren des Hubvolumens des ersten Motors 8 wird die Abtriebswelle 30, und somit die Fahrgeschwindigkeit, weiter beschleunigt, wodurch auch die Drehzahl des zweiten Hydromotors 12 weiter erhöht wird. Da der zweite Hydromotor 12 jedoch auf seinem Hubvolumen Null und das Ventil 13 in seiner zweiten Schaltposition ist, ist es möglich, den Hydromotor 12 oberhalb seiner maximal zulässigen Drehzahl zu betreiben. Der erste Motor 8 wird nun auf ein minimales Hubvolumen verstellt, wodurch die Endgeschwindigkeit, beispielsweise 40 km/h, erreicht wird. Die Schalteinrichtung 23 kann klein dimensioniert werden, da die Schalteinrichtung 23 ausschließlich die Massenträgheitsmomente der Zahnräder des ersten Untersetzungsgetriebeteils 28 bzw. des zweiten Untersetzungsgetriebeteils 29 und der Welle des ersten Hydromotors 8 synchronisieren muß. Die Verwendung von Radialkolben-Hydromotoren, insbesondere innen abgestützten Radialkolben-Hydromotoren, hat zusätzlich den Vorteil, dass das Geräusch der Antriebseinheit verringert wird und somit ein geräuschoptimierter Antrieb entsteht. Durch die Absenkung der Antriebsdrehzahl der Pumpe 1 kann zusätzlich das Geräusch verringert werden.

### Fig. 2:

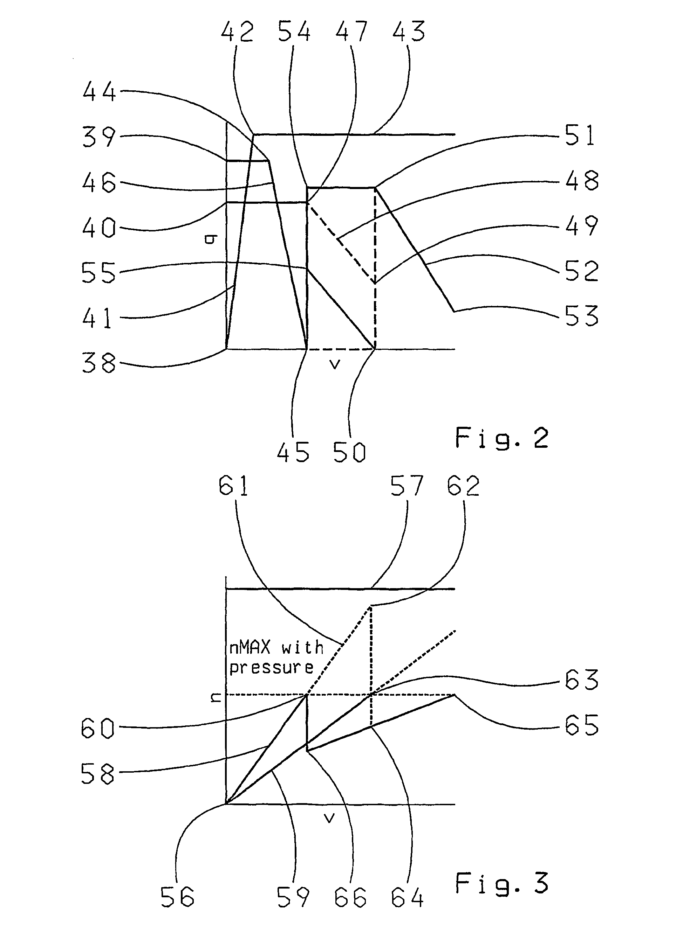

Auf der Ordinate des Diagramms sind die Hubvolumina der Pumpe 1 des ersten Motors 8 und des zweiten Motors 12 von Fig. 2 dargestellt. Auf der Abszisse ist die Fahrgeschwindigkeit des Fahrzeugs bzw. die Abtriebsdrehzahl der Abtriebswelle 30 dargestellt. Im Ursprung 38 steht das Fahrzeug und hat somit die Geschwindigkeit Null, das Hubvolumen der Pumpe 1 ist ebenfalls auf Null, das Hubvolumen des ersten Motors 8 ist auf seinem Maximum, was mit dem Punkt 39 dargestellt ist, und das Hubvolumen des zweiten Motors 12 ist ebenfalls auf seinem Maximum, was im Punkt 40 dargestellt ist. Durch Vergrößern des Hubvolumens der Pumpe 1 gewinnt das Fahrzeug an Geschwindigkeit, wobei sich die Abtriebswelle 30 beschleunigt, was in der Linie 41 dargestellt ist. Das Untersetzungsgetriebe der Fig. 2 ist im ersten Gang geschaltet, wobei der erste Untersetzungsgetriebeteil 28 über die Schalteinrichtung 23 mit der Abtriebswelle 30 verbunden ist. Ab dem Punkt 42 bleibt die Pumpe 1 auf ihrem maximalen Hubvolumen, was durch die Linie 43 dargestellt ist. Ab dem Punkt 44 wird das Hubvolumen des ersten Motors 8 reduziert, bis er sein Hubvolumen Null im Punkt 45 erreicht. Die Reduzierung des Hubvolumens des Motors 8 ist in der Linie 46 dargestellt. Im Punkt 45 hat der erste Motor 8 sein maximales zulässiges Drehzahlniveau erreicht und wird vom Hochdruck über das Ventil 9 getrennt. Um das Fahrzeug weiter zu beschleunigen, wird ab dem Punkt 47 das Hubvolumen des zweiten Motors 12 reduziert, wodurch die Drehzahl der Abtriebswelle 30 zunimmt und auch die Drehzahl des ersten Hydromotors 8 über sein maximal zulässiges Drehzahlniveau beschleunigt wird. Die Reduzierung des Hubvolumens des zweiten Motors 12 ist in der Linie 48 dargestellt. Im Punkt 49 erreicht der zweite Motor 12 sein maximales Dehzahlniveau, welches beispielsweise einer Fahrzeuggeschwindigkeit von nahezu 20 km/h entsprechen kann, und wird zuerst im Hubvolumen auf Null gestellt und anschließend über das Ventil 13 vom Hochdruck getrennt. Somit befindet sich der zweite Motor 12 im Punkt 50 auf Hubvolumen Null und ist vom Hochdruck getrennt. Gleichzeitig wird im Punkt 50 der erste Motor 8 über das Ventil 9 wieder mit dem Hochdruck verbunden und auf ein entsprechend hohes Hubvolumen verstellt, was im Punkt 51 ersichtlich ist. Bevor der erste Motor 8 wieder über das Ventil 9 mit dem Hochdruck verbunden ist und auf das Hubvolumen im Punkt 51 verstellt wird, wird das Ventil 21 aktiviert, wodurch die Schalteinrichtung 23 den ersten Motor 8 über das Untersetzungsgetriebeteil 29 mit der Abtriebswelle 30 verbindet, wodurch der zweite Gang geschaltet ist. Da der erste Motor 8 bei dieser Schaltung auf Hubvolumen Null und vom Hochdruck getrennt ist, muß die Schalteinrichtung 23 nur die Massenträgheitsmomente der Stirnräder und der Welle des Hydromotors synchronisieren. Wenn sich der erste Hydromotor 8 wieder in seinem großen Hubvolumen des Punkts 51 befindet, wird dieses Hubvolumen wieder reduziert, was in der Linie 52 dargestellt ist, bis das Fahrzeug im Punkt 53 seine Endgeschwindigkeit von beispielsweise 40 km/h erreicht. Bei dieser Endgeschwindigkeit befindet sich der zweite Motor 12 oberhalb seines zulässigen Drehzahlniveaus. Das zulässige Drehzahlniveau definiert sich nach technischen und wirtschaftlichen Gesichtspunkten, bei welchen der Hydromotor mit dem Hochdruck beaufschlagt ist. Es besteht auch die Möglichkeit, im Punkt 45 die Schaltung auf den zweiten Gang zu vollziehen und anschließend das Hubvolumen des ersten Motors in den Punkt 54 zu stellen, wobei das Hubvolumen des zweiten Motors 12 auf den Punkt 55 verstellt wird. Anschließend wird das Hubvolumen des ersten Motors 8 vom Punkt 54 bis zum Punkt 51 konstant gehalten und das Hubvolumen des zweiten Motors 12 vom Punkt 55 zum Punkt 50 reduziert. Innerhalb des Fensters, welches durch die Punkte 47, 49, 55 und 50 gebildet wird, ist eine Schaltung der Schalteinrichtung 23 und die damit verbundene Hubvolumen-Verstellung möglich. Vorzugsweise wird beim Beschleunigen des Fahrzeugs die Schaltung vom ersten Gang in den zweiten Gang möglichst spät ausgeführt und beim Reduzieren der Fahrgeschwindigkeit die Rückschaltung vom zweiten Gang in den ersten Gang möglichst erst bei kleiner Geschwindigkeit ausgeführt, wodurrch das Schaltpendeln verhindert werden kann.

### Fig. 3:

Auf der Ordinate sind die Drehzahlen der Pumpe 1 des ersten Motors 8 und des zweiten Motors 12 dargestellt. Auf der Abszisse ist die Fahrgeschwindigkeit bzw. die Abtriebsdrehzahl der Abtriebswelle 30 dargestellt. Im Ursprung 56 befindet sich die Pumpe 1 auf ihrer maximalen Drehzahl, was durch die Linie 57 dargestellt ist, und der erste Motor 8 und der zweite Motor 12 sind im Stillstand. Durch Erhöhen des Hubvolumens der Pumpe 1 beschleunigen sich der erste Motor 8, was durch die Linie 58 dargestellt ist, und der zweite Motor 12, was durch die Linie 59 dargestellt ist. Im Punkt 60 erreicht der erste Motor 8 seine maximal zulässige Drehzahl bei Hochdruckbeaufschlagung und wird auf das Hubvolumen Null gestellt und über das Ventil 9 vom Hochdruck getrennt. Die Linie 61 stellt den Verlauf der Drehzahl oberhalb der maximal zulässigen Drehzahl des ersten Motors 8 dar, wobei auch der zweite Motor 12 durch Reduzierung des Hubvolumens weiter beschleunigit wird. Die Schalteinrichtung 23 hat in diesem Zustand den ersten Gang, somit das erste Untersetzungsgetriebeteil 28, geschaltet. Im Punkt 63 erreicht der zweite Motor 12 seine maximale zulässige Drehzahl und wird auf sein Hubvolumen Null gestellt und über das Ventil 13 vom Hochdruck getrennt, was im Punkt 63 sichtbar ist. In den Punkten 62 und 64 wirkt die Schalteinrichtung 23, so dass der zweite Gang geschaltet ist, und das zweite Untersetzungsgetriebeteil 29 im Eingriff ist. Der erste Motor 8 weist somit die Drehzahl des Punktes 64 auf und wird über die Reduzierung seines Hubvolumens weiter beschleunigt, bis er im Punkt 65 seine maximal zulässige Drehzahl und somit die Endgeschwindigkeit des Fahrzeugs erreicht. Ebenso besteht die Möglichkeit, die Schaltung vom ersten Gang in den zweiten Gang schon beim Punkt 60 durchzuführen, wodurch die Drehzahl des ersten Motors 8 auf den Punkt 66 fällt, wodurch mit beiden Motoren bis zu den Punkten 63 und 64 weiter beschleunigt werden kann. Die Hubvolumen des ersten Motors 8, des zweiten Motors 12 und die Übersetzungen des ersten Getriebeteils 28 und des zweiten Getriebeteils 29 und des dritten Getriebeteils 31 sind so ausgelegt, dass eine Schaltung vom ersten in den zweiten Gang erst bei Beendigung des Arbeitsbereichs des Fahrzeugs nötig ist. Bei der Schaltung vom ersten in den zweiten Gang ist die Zugkraft des Fahrzeugs im ersten Gang unterhalb der Zugkraft des Fahrzeugs im zweiten Gang, damit das Fahrzeug weiter beschleunigt werden kann.

### Bezugszeichen

- 1: Pumpe
- 2: gemeinsame Hochdruckleitung
- 3: gemeinsame Niederdruckleitung
- 4: Speisepumpe
- 5: Speisedruckleitung
- 6: Reservoir
- 7: Druckmittelzuführung
- 8: erster Motor
- 9: Ventil
- 10: Druckmittelrückführung
- 11: Druckmittelzuführung
- 12: zweiter Motor
- 13: Ventil
- 14: Druckmittelrückführung
- 15: Ventil
- 16: Ventil
- 17: Hubvolumen-Verstelleinrichtung
- 18: Hubvolumen-Verstelleinrichtung
- 19: Proportionalventil
- 20: Proportionalventil
- 21: Ventil
- 22: Betätigungsvorrichtung
- 23: Schalteinrichtung
- 24: Rastierung
- 25: Leitung
- 26: Leitung
- 27: Spülventil
- 28: erstes Untersetzungsgetriebeteil
- 29: zweites Untersetzungsgetriebeteil
- 30: Abtriebswelle
- 31: drittes Untersetzungsgetriebeteil
- 32: erstes Stirnrad
- 33: zweites Stirnrad
- 34: erstes Stirnrad
- 35: zweites Stirnrad
- 36: erstes Stirnrad
- 37: zweites Stirnrad
- 38: Ursprung
- 39: Punkt
- 40: Punkt
- 41: Linie
- 42: Punkt
- 43: Linie
- 44: Punkt
- 45: Punkt
- 46: Linie
- 47: Punkt
- 48: Linie
- 49: Punkt
- 50: Punkt
- 51: Punkt
- 52: Linie
- 53: Punkt
- 54: Punkt
- 55: Punkt
- 56: Ursprung
- 57: Linie
- 58: Linie
- 59: Linie
- 60: Punkt
- 61: Linie
- 62: Punkt
- 63: Punkt
- 64: Punkt
- 65: Punkt
- 66: Punkt
- 67: Kühler
- 68: Leitung

## Patentansprüche

1. Antrieb für ein Mobilfahrzeug mit zwei hydraulischen Motoren (8, 12), welche mit einer gemeinsamen Hochdruckleitung (2) einer Druckmittelquelle (1) verbindbar sind, wobei ein Motor (8) in einem ersten Fahrbereich über ein erstes Untersetzungsgetriebeteil (28) mit einer Abtriebswelle (30) verbunden ist, und in einem zweiten Fahrbereich über ein zweites Untersetzungsgetriebeteil (29) mit der Abtriebswelle (30) verbunden ist und der andere Motor (12) über ein drittes Untersetzungsgetriebeteil (31) mit der Abtriebswelle (30) verbunden ist, **dadurch gekennzeichnet , dass** mindestens ein Motor (8,12) als innen abgestützter Radialkolbenmotor ausgeführt ist und bei der maximalen Drehzahl der Abtriebswelle (30) ein Motor (12) auf ein Hubvolumen Null verstellt und von der gemeinsamen Hochdruckleitung (2) getrennt ist.

2. Antrieb für ein Mobilfahrzeug nach Anspruch 1, **dadurch gekennzeichnet, dass** eine Schalteinrichtung (23) die Abtriebswelle (30) mit dem ersten Untersetzungsgetriebeteil (28) oder dem zweiten Untersetzungsgetriebeteil (29) verbindet.

3. Antrieb für ein Mobilfahrzeug nach Anspruch 1, **dadurch gekennzeichnet, dass** die Schalteinrichtung eine mechanische Synchronisierschalteinrichtung ist.

4. Antrieb für ein Mobilfahrzeug nach Anspruch 1, **dadurch gekennzeichnet, dass** die Motore (8, 12) über eine Verstelleinrichtung (17, 18) in ihrem Hubvolumen auf Hubvolumen Null verstellbar sind und die Verstelleinrichtung (17, 18) mit der gemeinsamen Hochdruckleitung (2) in Verbindung bringbar und trennbar ist.

5. Antrieb für ein Mobilfahrzeug nach Anspruch 1, **dadurch** gekenn- zeichnet, dass der Motor (8,12) beim Trennen von der gemeinsamen Hochdruckleitung (2) mit einer Druckleitung (5) einer Speisepumpe (4) verbindbar ist.

6. Antrieb für ein Mobilfahrzeug nach Anspruch 1, **dadurch gekennzeichnet, dass** die Verstelleinrichtung (17, 18) des Motors in seiner Kurbelwelle angeordnet ist.

7. Antrieb für ein Mobilfahrzeug nach Anspruch 1, **dadurch gekennzeichnet, dass** die Untersetzungsgetriebeteile (28, 29, 31) als Stirnradgetriebe ausgebildet sind.

8. Antrieb für ein Mobilfahrzeug nach Anspruch 1, **dadurch gekennzeichnet, dass** die Motoren (8, 9) sowie die Untersetzungsgetriebe (28, 29, 31) in einem gemeinsamen Gehäuse angeordnet sind, welches das Druckmittelreservoir (6) bildet.

9. Antrieb für ein Mobilfahrzeug nach Anspruch 1, **dadurch gekennzeichnet, dass** der Antrieb in einer Arbeitsmaschine, insbesondere in einem Radlader, verwendet wird, welcher eine Maximalgeschwindigkeit von nahezu 40 km/h hat, und bei welchem im ersten Arbeitsbereich bis ca. 20 km/h keine Schaltung erfolgt.

10. Antrieb für ein Mobilfahrzeug nach Anspruch 1, **dadurch gekennzeichnet, dass** der Motor (8, 12) beim Trennen von der gemeinsamen Hochdruckleitung (2) mit einer Schmierdruckleitung (68) verbindbar ist.
(Weiter auf Blatt 19 der ursprünglich eingereichten Unterlagen.)

## Claims

1. Drive unit for a mobile vehicle, comprising two hydraulic motors (8, 12) which can be connected to a common high-pressure conduit (2) of a pressure medium source (1), one motor (8) being connected in a first driving range to an output shaft (30) via a first step-down transmission part (28) and being connected in a second driving range to the output shaft (30) via a second step-down transmission part (29) and the other motor (12) being connected to the output shaft (30) via a third step-down transmission part (31), **characterised in that** at least one motor (8, 12) is configured as an internally supported radial piston motor and, at the maximum rotational speed of the output shaft (30), one motor (12) is adjusted to a stroke volume of zero and separated from the common high-pressure conduit (2).

2. Drive unit for a mobile vehicle according to claim 1, **characterised in that** a switching means (23) connects the output shaft (30) to the first step-down transmission part (28) or the second step-down transmission part (29).

3. Drive unit for a mobile vehicle according to claim 1, **characterised in that** the switching means is a mechanical synchronised switching means.

4. Drive unit for a mobile vehicle according to claim 1, **characterised in that** the stroke volumes of the motors (8, 12) can be adjusted to a stroke volume of zero via an adjustment means (17, 18) and the adjustment means (17, 18) can be connected to and separated from the common high-pressure conduit (2).

5. Drive unit for a mobile vehicle according to claim 1, **characterised in that** the motor (8, 12) can be connected to a pressure conduit (5) of a feed pump (4) during separation from the common high-pressure conduit (2).

6. Drive unit for a mobile vehicle according to claim 1, **characterised in that** the adjustment means (17, 18) of the motor is arranged in its crankshaft.

7. Drive unit for a mobile vehicle according to claim 1, **characterised in that** the step-down transmission parts (28, 29, 31) are configured as a spur transmission.

8. Drive unit for a mobile vehicle according to claim 1, **characterised in that** the motors (8, 9) and the step-down transmissions (28, 29, 31) are arranged in a common housing which forms the pressure medium reservoir (6)

9. Drive unit for a mobile vehicle according to claim 1, **characterised in that** the drive is used in a work machine, in particular in a wheel loader which has a maximum speed of almost 40 km/h and in which no changing of gears is carried out in a first working range up to approx. 20 km/h.

10. Drive unit for a mobile vehicle according to claim 1, **characterised in that** the motor (8, 12) can be connected to a lubricating pressure conduit (68) during separation from the common high-pressure conduit (2).

## Revendications

1. Entraînement pour un véhicule mobile avec deux moteurs hydrauliques (8, 12) pouvant être reliés à une conduite de haute pression commune (2) d'une source de fluide sous pression (1), un moteur (8) étant relié, dans un premier domaine de travail, à un arbre de sortie (30) par l'intermédiaire d'une première partie de transmission de démultiplication (28) et, dans un second domaine de travail, à l'arbre de sortie (30) par l'intermédiaire d'une deuxième partie de transmission de démultiplication (29) et l'autre moteur (12) étant relié à l'arbre de sortie (30) par l'intermédiaire d'une troisième partie de transmission de démultiplication (31), **caractérisé en ce qu'**au moins un moteur (8, 12) est conçu comme un moteur à pistons radiaux à appuis internes et, lors de la vitesse de rotation maximale de l'arbre de sortie (30), un moteur (12) est réglé à une cylindrée nulle et séparé de la conduite de haute pression commune (2).

2. Entraînement pour un véhicule mobile selon la revendication 1, **caractérisé en ce qu'**un dispositif d'enclenchement (23) relie l'arbre de sortie (30) à la première partie de transmission de démultiplication (28) ou à la deuxième partie de transmission de démultiplication (29).

3. Entraînement pour un véhicule mobile selon la revendication 1, **caractérisé en ce que** le dispositif d'enclenchement est un dispositif de synchronisation mécanique.

4. Entraînement pour un véhicule mobile selon la revendication 1, **caractérisé en ce que** les moteurs (8, 12) peuvent être réglés à une cylindrée nulle par l'intermédiaire d'un dispositif de réglage (17, 18) et le dispositif de réglage (17, 18) peut être relié et séparé de la conduite de haute pression commune (2).

5. Entraînement pour un véhicule mobile selon la revendication 1, c a r a c t é r i s é en ce que le moteur (8, 12) peut être relié à une conduite de pression (5) d'une pompe d'alimentation (4) par l'intermédiaire de la conduite de haute pression commune (2).

6. Entraînement pour un véhicule mobile selon la revendication 1, **caractérisé en ce que** le dispositif de réglage (17, 18) du moteur se trouve au niveau de son vilebrequin.

7. Entraînement pour un véhicule mobile selon la revendication 1, **caractérisé en ce que** les parties de la transmission de démultiplication (28, 29, 31) sont conçues comme des transmissions à roues droites.

8. Entraînement pour un véhicule mobile selon la revendication 1, **caractérisé en ce que** les moteurs (8, 12) ainsi que les parties de la transmission de démultiplication (28, 29, 31) sont disposés dans un carter commun qui constitue le réservoir de fluide sous pression (6).

9. Entraînement pour un véhicule mobile selon la revendication 1, **caractérisé en ce que** l'entraînement est utilisé dans un engin de chantier, plus particulièrement une chargeuse à roues qui présente une vitesse maximale de presque 40 km/h et dans laquelle, dans le premier domaine de travail, aucun enclenchement n'est effectué jusqu'à environ 20 km/h.

10. Entraînement pour un véhicule mobile selon la revendication 1, **caractérisé en ce que** le moteur (8, 12) peut être relié à la conduite de pression de lubrification (68) lors de la séparation de la conduite de haute pression commune (2).
